Europäisches Patentamt

European Patent Office

Office européen des brevets

(19)

(11) Publication number : **0 480 694 A1**

# (12) EUROPEAN PATENT APPLICATION

(21) Application number : **91309255.7**

(22) Date of filing : **09.10.91**

(51) Int. Cl.$^5$ : **F16J 15/00**

(30) Priority : **09.10.90 GB 9021945**

(43) Date of publication of application :
**15.04.92 Bulletin 92/16**

(84) Designated Contracting States :
**BE CH DE ES FR GB IT LI NL**

(71) Applicant : **Electricity Association Services Limited**
**30 Millbank**
**London SW1P 4RD (GB)**

(72) Inventor : **Heaton, Alan Dr.**
**3 Ash Close**
**Tarporley, Cheshire CW6 0TY (GB)**

(74) Representative : **Cross, Rupert Edward Blount et al**
**BOULT, WADE & TENNANT 27 Furnival Street**
**London EC4A 1PQ (GB)**

(54) **Seals for rotary shafts.**

(57)    Seals for rotary shafts (6) are provided where a seal is required between a rotating shaft (6) and a boundary separating two fluids (A, B), and where the fluids (A, B) are under continuous or fluctuating pressures. A differential fluid pressure across the boundary can result in leakage of fluid from one side of the boundary to the other, contaminating the fluid at a lower pressure. The seal comprises a chamber (1) having opposed apertures (4, 5) to receive a shaft (6) extending through the chamber (1). Means are provided to maintain fluid (C) in the chamber (1) at a controlled pressure. The apertures (4, 5) are arranged to provide limited leakage if any, of fluid (A, B, C) through the apertures (4, 5). By providing fluid (C) in the chamber (1) at a controlled pressure, leakage into the chamber (1) of fluid (A) from one or other side of the seal is prevented from contaminating fluid (B) on the opposite side of the seal.

FIG. 1.

EP 0 480 694 A1

The present invention relates to seals for rotary shafts. Such seals have broad industrial application especially in relation to pumps compressors and turbines, where a seal is required between a rotating shaft and a boundary separating two fluids, the fluids being under continuous or fluctuating pressures. One problem arising from the establishment of a differential fluid pressure across the boundary is the leakage through the seal of the fluid at higher pressure, resulting in contamination of the fluid at lower pressure. If the differential pressure is substantial then partial or complete breakdown of the seal may occur.

The invention provides a seal for a rotary shaft comprising a chamber having opposed apertures to receive the shaft extending through said chamber, means to maintain fluid in said chamber at a controlled pressure, said apertures being arranged to provide limited leakage, if any, through the apertures.

An advantage of the present invention is that by providing a fluid in the chamber at a controlled pressure, leakage into the chamber of fluid from one or other side is prevented from contaminating fluid on the opposite side of the seal.

Advantageously, at least one of the apertures is defined by a bush providing an annular space between the shaft and the inner face of the bush extending over a predetermined length of the shaft to provide a predetermined impedance to the flow of fluid leaking through the aperture.

In a preferred embodiment a means is provided to maintain a flow of fluid through the chamber, thereby extracting contaminates which may leak into the chamber through either aperture. A further advantage is that excess heat produced by friction between the seal members and the rotating shaft may be extracted by the fluid, which may subsequently be cooled by a heat exchanger.

In addition, a further advantage is that the fluid may provide lubrication of the seal.

Advantageously the fluid is maintained in a closed circuit.

In a preferred embodiment the invention provides an array of sealing chambers positioned adjacently in cascade, enabling a large differential pressure across the entire seal to be accommodated, without inducing contamination of the fluid either side of the seal, since the pressure will be divided among the number of individual sealing chambers.

Examples of embodiments of the present invention will now be described with reference to the drawings, in which:-

Figures 1 and 2 show cross-sections of first and second embodiments of the invention;

Figure 3 shows a closed circuit arrangement for use with the embodiments shown in Figures 1 or 2, and

Figure 4 shows an embodiment of the seal comprising a plurality of chambers.

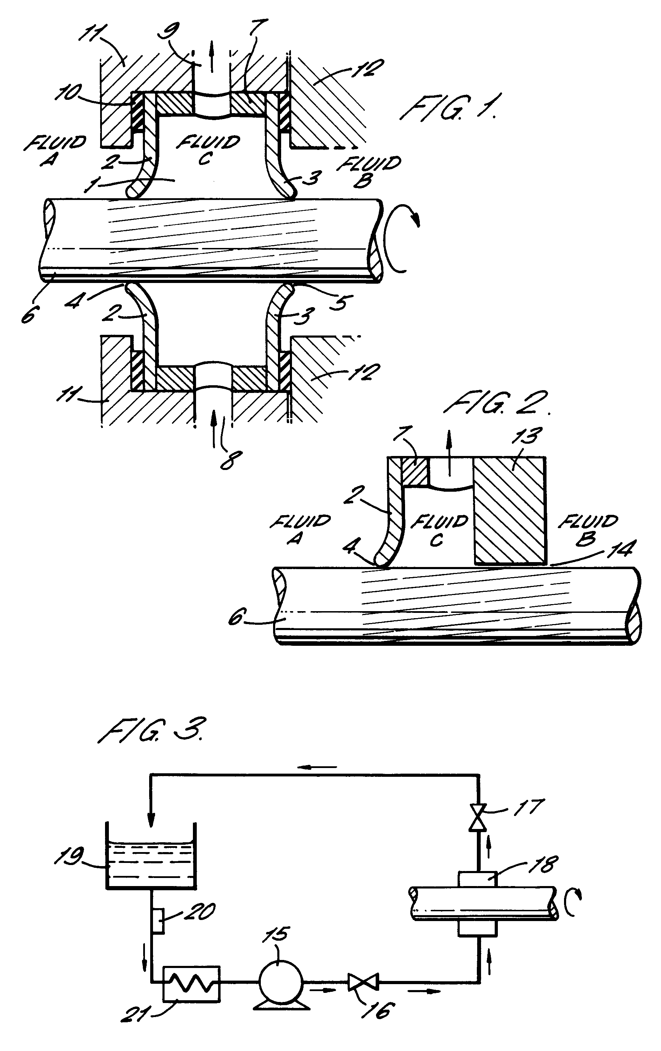

Referring to Figure 1 a chamber 1 comprises seal members 2 and 3 having opposing apertures 4 and 5 to receive and make a seal to a shaft 6. The surface of the shaft is hardened in the vicinity of the seal members to reduce wear. The cross-section of the chamber 1, perpendicular to the longitudinal axis of the shaft can be of any suitable geometry; circular, eliptical, square, rectangular, polygonal or irregular, the geometry depending on factors such as the nature of the required flow of fluid through the chamber 1, and the application of the seal.

In Figure 1 the seal members 2 and 3 are parallel, but this is not a necessity, and are adjoined by a lantern ring 7, to form the closed chamber 1. The radial surfaces of the seal members 2 and 3, curve outwards from the chamber in the proximity of their respective apertures 4 and 5 so that the seal members 2 and 3 make an angle with the adjoining shaft 6 at the closest point of adjacency. When in use, the chamber 1 is positioned between fluids A and B, having within the chamber 1, a fluid C maintained at some predetermined pressure. The radial pressure of the seal members 2 and 3 acting against the outer circumference of the shaft 6 is dependent on any pre-stress within the material of the seal member, and the pressure difference of fluid either side of the seal member. The pre-stress pressure is usually constant and cannot be varied when the seal is in use. The pressure difference is varied by controlling the pressure of fluid C which subsequently varies the radial pressure acting on the shaft. It is therefore possible to control both the throughput of fluid C leaking through the aperture from the chamber, and the throughput of fluid, A or B leaking into the chamber.

The operation of the seal may be illustrated by the following examples of possible situations:

(i) Referring to Figure 1, if the pressure of fluid C is higher than both the sum of the pressure of fluid A and the pre-stress radial pressure seal member 2, and the sum of the pressure of fluid B and the pre-stress radial pressure of seal member 3, fluid C only will leak into fluids A and B.

(ii) If the sum of the pressure of fluid C and the pre-stress pressure of seal member 2, and the sum of the pressure of fluid C and the pre-stress pressure of seal member 3 are less than the pressures of both fluids A and B, fluids A and B will leak into fluid C. In both the above situations (i) and (ii), although fluids A and B are either contaminated by or contaminate fluid C, fluids A and B are prevented from contaiminating each other.

(iii) If the pressure of fluid C is intermediate between fluids A and B, the fluid at a higher pressure than fluid C will leak into fluid C. At the same time fluid C may leak into the fluid at a pressure lower than fluid C. If the concentration of the contaminate fluid in fluid C in the chamber is maintained at a sufficiently low level, fluids A and B will be prevented from crossing the seal.

The chamber has opposed holes 8 and 9 for the inflow and outflow of fluid to and from the chamber 1.

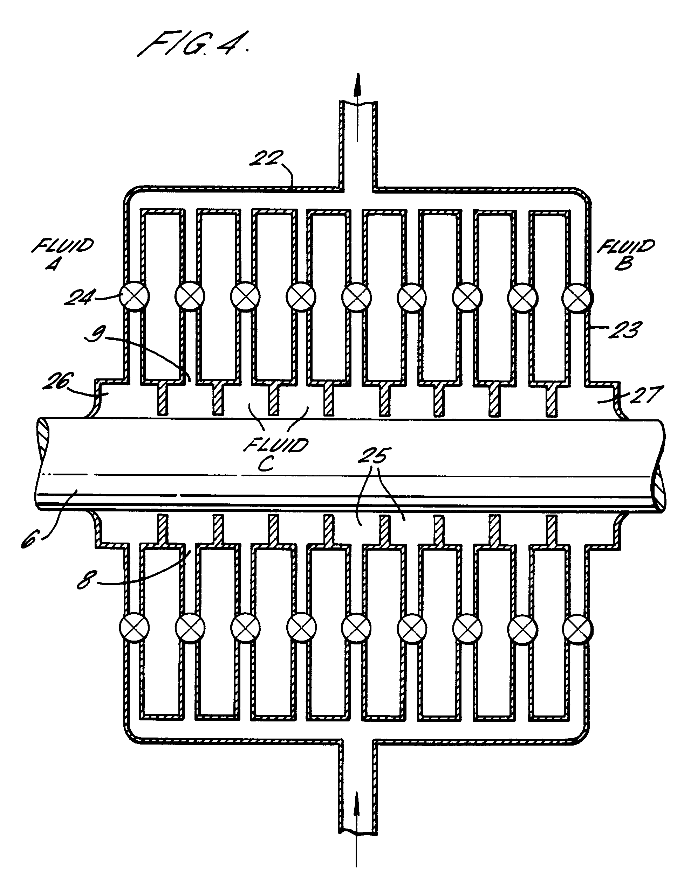

The pressure of fluid C in the chamber is controlled by one or more valves 16 and 17 shown in Figure 3 which serve as an impedance to the fluid C flowing through the chamber, in addition to any predetermined restriction presented by the holes 8 and 9.

A sealing ring 10 is positioned against the outer surface of each seal member 2 and 3 of the chamber 1. The abutment surfaces of the seal members 2 and 3 and lantern ring 7 are forced together by the opposite and parallel end members of a clamp 11 and 12 acting against the sealing rings 10, one side member of the clamp 12 being a suitable surface of, for example, a pump.

Lantern ring 7 and seal members 2 and 3 of the chamber 1 may equally be formed as a single unit from a suitable material which has the advantage of making redundant the sealing rings 10 and the action of the clamp in holding the chamber together.

Figure 2 shows an alternative arrangement of the seal members to that in Figure 1 in which seal member 3 is replaced by a bush 13 providing an annular space 14 between the shaft and the inner face of the bush and extending over a predetermined length of the shaft 6 to provide a predetermined impedance to the flow of fluid C leaking through the annular space. The throughput of fluid C leaking through aperture 4 of the seal member 2 or the annular space 14 is controlled by the pressure of fluid C.

In another example (not shown) a seal member 2 or 3 can be a close fitting ring.

A preferred seal feed arrangement provides a means to maintain fluid in the chamber at a controlled pressure (in Figure 3) and comprises a pump 15 valves 16 and 17 between which is positioned the seal 18 as described with reference to Figures 1 and 2, a fluid replacement tank 19, a filter 20 and heat exhanger 21 connected together by suitable conduits in a closed circuit. Valves 16 and 17 provide the predominant means for controlling the pressure within the seal chamber 1 in Figure 1 and the flow rate through the circuit. The filter 20 cleans fluid C from contaminates which have mixed with fluid C by leakage of either fluid A or B into the chamber or any other impurities which have mixed with the fluid C elsewhere. The tank 19 serves as a reservoir for fluid C, continuously replacing fluid C lost through the apertures of the seal members of the chamber or elsewhere. Hot fluid C flowing from the chamber 1 is cooled by the heat exhanger before being recirculated. The pump 15 drives the fluid C through the circuit.

In addition to a seal comprising a single chamber, in a preferred embodiment an alternative seal has a plurality of chambers, as hereinbefore described by way of example only, positioned adjacently to form an array parallel to the shaft as shown in Figure 4. A means to maintain fluid in each chamber is provided by, for example, the seal feed arrangement described in Figure 3. In a preferred embodiment of the seal feed arrangement, a manifold 22 is connected in the circuit either side of the seal from which individual conduits 23, each having a valve 24, extend, connecting with each chamber 25. Each valve 24 provides a means to continuously control the fluid pressure drop across and flow rate through, the chamber 25. The pressure drop across each chamber and fluid flow rate through each chamber are also functions of the geometry of each chamber and the diameter of the holes 8 and 9 and the diameter of the conduits.

One application of this arrangement is where a large differential pressure exists across the seal. The pressure of fluids maintained in chambers 26 and 27 at both extremes of the seal may be arranged to match the pressures of fluids A and B either side of the seal. The pressure difference between fluids in the extreme chambers may be divided among the remaining inner chambers. This arrangement enables relatively large differential pressures across the seal to be withstood.

## Claims

1. A seal for a rotary shaft (6) comprising a chamber (1) having opposed apertures (4,5) to receive the shaft (6) extending through said chamber (1), means to maintain fluid (C) in said chamber (1) at a controlled pressure, said apertures (4,5) being arranged to provide limited leakage, if any, through the apertures (4,5).

2. A seal as claimed in Claim 1, wherein at least one of said apertures (4, 5) is defined by a seal member (2, 3) for sealing to the shaft.

3. A seal as claimed in Claims 1 or 2, wherein at least one of said apertures (4,5) is defined by a bush (13) providing an annular space (14) between the shaft (6) and the inner face of the bush extending over a predetermined length of the shaft to provide a predetermined impedance to the flow of fluid (A,B,C) leaking through said aperture (4,5).

4. A seal as claimed in any preceding claim, wherein said means to maintain is arranged to control the fluid pressure in said chamber (1) so as to minimise leakage across the seal.

5. A seal as claimed in any preceding claim, wherein said means to maintain is arranged to maintain a flow of fluid (C) through said chamber (1).

6. A seal as claimed in Claim 5, wherein the fluid (C) is maintained in a closed circuit.

7. A seal as claimed in Claim 6, wherein said closed circuit includes a heat exchanger (21) to cool said fluid.

8. A seal as claimed in any preceding claim in combination with a rotary shaft to which the seal is to be fitted, wherein the surface of the shaft is hardened in the vicinity of the seal.

9. A seal as claimed in any preceding claim comprising a plurality of said chambers (1) positioned adjacently.

FIG. 1.

FIG. 2.

FIG. 3.

FIG.4.

FLUID
A

FLUID
B

FLUID
C

European Patent Office

# EUROPEAN SEARCH REPORT

Application Number

EP 91 30 9255

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-3 817 660 (BLOHM+VOSS)<br>* the whole document *<br>--- | 1-2,4,9 | F16J15/00 |
| X | FR-A-2 308 032 (SIGMA GENERALNI)<br><br>* page 4, line 18 - line 40; figures *<br>--- | 1-2,4-7,9 | |
| X | PATENT ABSTRACTS OF JAPAN<br>vol. 10, no. 189 (M-494)(2245) 3 July 1986<br>& JP-A-61 031 769 ( ISHIKAWJIMA )<br>* abstract *<br>--- | 1-5,7 | |
| A | EP-A-0 266 732 (HÄRING)<br>* abstract *<br><br>----- | 8 | |
| | | | TECHNICAL FIELDS SEARCHED (Int. Cl.5 )<br><br>F16J |

The present search report has been drawn up for all claims

| Place of search | Date of completion of the search | Examiner |
|---|---|---|
| THE HAGUE | 21 JANUARY 1992 | NARMINIO A. |

EPO FORM 1503 03.82 (P0401)